# DEMANDE DE BREVET EUROPEEN

(11) **EP 2 168 715 A1**
(43) Date de publication de la demande: **31.03.2010**
(21) Numéro de dépôt: 08165185.3
(22) Date de dépôt: 26.09.2008
(51) Int. Cl.: B23Q 11/00, B23Q 11/10, B01D 33/04

(54) **Système de traitement d'huile d'usinage**

(71) Demandeur: Tornos SA, 2740 Moutier (CH)
(72) Inventeur: Teodorescu, Dragos, 2800 Delélont (CH); Wensauer, Dietmar, 51143 Köln (DE); Chardonnereau, André, 6045 Meggen (CH)
(74) Mandataire: Scheuzger, Beat Otto

(57) **Abrégé**

Système de traitement de fluide de coupe, adaptable à une machine-outil (1), dont le fluide de coupe, contaminé par les déchets d'usinage, sort d'une zone d'usinage (2),
le système de traitement comprenant:
des moyens de séparation (3,18,13,15) pour séparer les déchets d'usinage du fluide de coupe, les moyens de séparation (3,18,13,15) comprenant un convoyeur à filtrage (13,15),
le convoyeur à filtrage (13,15) étant disposés au moins partiellement à l'intérieur de la machine-outil (1),
le système de traitement comprenant en outre des moyens de récupération du fluide de coupe (6),
le système de traitement étant caractérisé en ce que:
ledit convoyeur à filtrage (13,15) est disposé en-dessous de ladite zone d'usinage (2),
ledit convoyeur à filtrage (13,15) comprend une nappe à matière de filtrage jetable disposée sur une surface supérieure du convoyeur (13,15),
ledit convoyeur à filtrage (13,15) est disposé au-dessus des moyens de récupération du fluide de coupe (6),
tel que le fluide de coupe puisse passer, sous force de pesanteur, de la zone d'usinage (2), par ladite nappe à matière de filtrage jetable, aux moyens de récupération du fluide de coupe (6).

## Description

La présente invention se rapporte à des machines-outils, et plus particulièrement aux systèmes de filtrage qui permettent de séparer l'huile de coupe et les copeaux produits par une machine-outil lors de l'usinage, et ainsi de récupérer l'huile filtrée et d'évacuer ces copeaux.

Par machine-outil, dans la présente demande, on désigne toutes sortes de machines à usinage utilisant de l'huile ou d'autres fluides pour la lubrification ou le refroidissement des pièce usinées. Telles machines incluent par exemple, mais non-exclusivement, des machines à meulage, décolletage, fraisage, tournage ou tronçonnage.

Par huile de coupe, dans la présente demande, on désigne tout fluide qui peut servir à la lubrification ou au refroidissement d'une telle machine-outil ou des pièce usinées.

Pendant l'usinage des pièces par la machine-outil, l'huile de coupe, avec les copeaux et les résidus de l'usinage, sort de la zone ou se déroule l'usinage comme un mélange de déchets et d'huile.

L'invention se rapporte à l'extraction des copeaux et des résidus d'usinages de l'huile de coupe. Par copeaux, on désigne tout morceau de déchets à taille supérieure généré pendant l'usinage. Les copeaux représentent une quantité de matière recyclable de valeur importante. Egalement, on essaye de récupérer autant du fluide de coupe que possible, car toute perte du fluide réprésente un cout additional. Il est souhaitable de récupérer les copeaux avec le minimum d'huile de coupe ou d'autres matières qui pourraient gêner le recyclage, et il est souhaitable de récupérer l'huile de coupe avec le minimum de déchets d'usinage qui pourraient empêcher la recirculation de l'huile dans la machine-outil, ou endommager les éléments de circulation, tels que les pompes.

Le terme résidu, par contre, signifie les morceaux plus fins de la matière usinée ou des matières d'usinage, tels que des abrasifs ou d'autres produits d'affûtage - les particules qui sont assez grandes pour gêner l'operation de la machine-outil si elles ne sont pas enlevées, mais qui sont assez petites pour ne pas être récupérées par des moyens de séparation de copeaux. Une grande partie des résidus reste souvent en suspension dans l'huile de coupe, au moins pour la durée du traitement du fluide.

Ces définitions de taille des copeaux et des résidus peuvent être fixées librement, dépendantes par exemple des caracteristiques de l'huile, de la machine-outil, de la matière usinée, des considérations de recyclage, ou quelconques autres paramètres qui ont une influence sur l'opération de la machine-outil ou le traitement des restes de l'usinage. Un filtrage comme celui prévu dans la présente invention peut typiquement filtrer tout résidu de plus de 100microns, mais cette dimension est donné à titre d'exemple seulement. La finesse du filtrage peut être choisie selon quelconques impératifs de la machine-outil, et selon les matières de filtrage disponible.

Il est connu dans l'art de récupérer les copeaux qui tombent de la zone d'usinage d'une machine-outil - soit dans un bac perforé comme un tamis à grosses mailles, soit sur un convoyeur sans fin qui transporte les copeaux hors de la machine. Par convoyeur, dans le contexte de cette demande, on désigne un tapis roulant, dont le tapis est d'une forme et d'une matière appropriée au transport des morceaux de métal ou d'autres matériaux étant usinés. La récuperation directement en-dessous de la zone d'usinage a l'avantage que l'huile et les fins résidus puissent dégoutter des copeaux sans la nécessité d'une étape d'essorage séparée. Avec un bac, l'opérateur doit arrêter la machine régulièrement pour vider les copeaux. Un convoyeur, part contre, permet à la machine de continuer sans arrêt. Le document US4,685,361 décrit une machine-outil sur laquelle s'adapte un système de séparation de copeaux ayant un convoyeur à chaîne à tapis d'évacuation supérieur et tapis de retour inférieur, dont un tronçon surbaissé peut être engagé sous la zone d'usinage de la machine-outil, et dont un tronçon relevé assure l'évacuation des copeaux au-dessus du niveau d'huile de coupe. Le dispositif de séparation de copeaux peut être engagé frontalement dans la machine-outil, et il comprend une pompe pour rejeter l'huile dans la machine-outil.

Dans la machine-outil connue, l'huile partiellement nettoyée mais toujours contaminée par des fins résidus d'usinage tombent dans un réservoir dans la machine-outil. Depuis ce réservoir, l'huile est recirculée et rejetée dans la zone d'usinage. La réutilisation d'huile sale apporte une dégradation rapide de l'efficacité de l'huile pour l'usinage, et par conséquence une dégradation de la qualité des pièces usinées ainsi qu'une réduction de la durée de vie des outils, des pompes, des soupapes et tout élément de la circulation hydaulique. L'utilisation de l'huile sale a notamment un effet délétère sur la qualité de l'usinage.

Pour améliorer la propreté de l'huile, il est connu de faire une deuxième étape de nettoyage du fluide de coupe. La solution proposée dans le brevet americain US2002/0139722 (Bratten) comprend un deuxième convoyeur avec un tapis continu à fines mailles, immergé dans l'huile sale, qui enlève les résidus de l'huile sale dans le bac. Cette solution peut réduire la taille et la quantité des résidus dans l'huile, mais ne peut pas éliminer les particules abrasives et ainsi délétères pour la machine-outil.

Pour améliorer ces inconvénients d'un tel système de traitement d'huile, il est connu de filtrer l'huile après avoir enlevé les copeaux. Il n'est pas pratique d'utiliser des filtres sur conduite (« in-line ») dans le système de circulation d'huile, puisque tels filtres nécessitent un entretien régulier qui interromp l'opération de la machine-outil. Une solution proposée, par exemple dans le document japonais JP2003210914, est l'utilisation d'un filtre à convoyeur, sur lequel une nappe à matière de filtrage (papier, par exemple, ou tissu) avance avec le convoyeur, d'une façon lente et continue, tel que l'huile est constamment filtrée par un filtre dont au moins une partie est fraîche et non-usée. Ce système à convoyeur continu a l'avantage qu'il est capable de fonctionner pratiquement sans interruption - ni pour l'entretien du filtrage, ni pour vider les déchets. Un tel filtre à grande surface et à matière de filtrage très fine et jetable est aussi capable de d'enlever la grande partie des impuretés - toute particule à taille de plus que 100 microns, par exemple, ou 50 microns, ce qui dépend de la matière de la nappe à filtrage.

Un autre avantage de ce système est que, puisque l'huile qui sort du filtre contient beaucoup moins d'impuretés, la fréquence du nettoyage des crépines d'aspiration et des circuits d'arrosage et de refroidissement de la machine-outil est aussi réduite. Ceci apporte une réduction du temps de maintenance de la machine-outil, et ainsi une réduction du temps non-productif de la machine-outil. Il est très important que la machine soit capable de marcher sans intervention d'un operateur pour un temps aussi long que possible. Tout bourrage de filtre, bouchage de tuyau ou blocage d'élément mécanique tel que pompe, peut apporter une perte de temps et de productivité.

La propreté améliorée de l'huile contribue aussi à une amélioration de la qualité de la surface des pièces, ainsi qu'une réduction de l'usure des outils et une prolongation de la durée de vie de l'huile et des éléments hydrauliques. En outre, grâce à la meilleure propreté de l'huile, la performance du système de circulation de l'huile peut être élevée. On peut utiliser des pompes à haute pression (jusqu'à 350bar, par exemple), ce qui est possible avec l'addition des modestes filtres supplémentaires, si l'huile est bien nettoyée.

Le système de filtrage de l'art antérieur a pourtant des inconvénients. Une telle machine à filtrage adaptée à une machine-outil représente un grand investissement et un encombrement de sol important, comparable avec celui de la machine-outil même. En outre, cette sorte de machine à filtrage est connectée extérieurement à la machine-outil, et le système nécessite des pompes et des tuyaux pour transporter l'huile sale depuis le bac de la machine-outil (bac à huile sale) vers la machine à filtrage, et pour retourner l'huile filtrée à la zone d'usinage. Le pompage l'huile sale nécessite aussi des pompes de transfer qui sont capable de soutenir la présence d'impuretés dans le fluide. Telles pompes coûtent beaucoup plus chères que les pompes qu'on peut utiliser pour le pompage de l'huile filtrée.

La machine à filtrage a un bac pour récupérer l'huile filtrée. Le système nécessite également une alimentation supplémentaire et des éléments de contrôle et de communication entre les deux machines.

L'huile peut dégrader chimiquement quand elle est en contact persistant avec des impuretés. Le pompage d'huile sale depuis la machine-outil vers la machine à filtrage aboutit aussi à une augmentation de mouvement, de turbulence et d'aération de l'huile sale, ce qui peut dégrader l'efficacité de l'huile.

La présence d'huile dégradée peut également provoquer un dégagement de la chaleur dans les circuits hydrauliques, et le pompage et stockage de l'huile sale comporte la nécessité de nettoyage et l'entretien régulier de toutes parties du système qui ont contact avec l'huile sale, c'est-à-dire par exemple le bac à huile sale, les tuyaux et les pompes. Tout temps de nettoyage ou entretien signifie du temps productif perdu pour la machine-outil.

La présente invention a pour but un système de traitement de fluide d'usinage qui comporte les avantages de la récuperation de copeaux en-dessous de la zone d'usinage avec les avantages de la filtration à convoyeur, mais sans les désavantages mentionnés ci-dessus.

En particulier, l'invention décrite dans cette demande a les advantages suivants :
le fluide de coupe n'est stockée que dans l'état propre ;
le filtrage est capable de filtrer le fluide très fin, sans nécessiter des pompes ou des tuyaux supplémentaires,
l'enveloppe au sol de la machine-outil reste le même, sans l'encombrement du sol additionel des éléments éxternes ;
l'aération et les perturbations mécaniques (turbulence, pompage) du fluide sont réduits. Une réduction en l'aération de l'huile apporte une réduction de la chaleur dégagée dans les circuits hydrauliques, une efficacité augmentée de la qualité de surface des pièces, et une réduction d'usure des outils ; et
le pompage d'huile sale est éliminé - ce qui apporte une réduction de nettoyage, d'usage et de protection de pompes ou de tuyaux.
A cet effet, l'invention a pour objet un système de traitement de fluide de coupe selon la revendication 1, à un dispositif de filtrage adapté a la machine-outil, selon la revendication 14, et à une machine-outil adapté à réaliser un système selon la revendication 1 et/ou recevoir un dispositif selon la revendication 14.

L'invention se rapporte également à des variantes de réalisation détaillées ci-après et dans les revendications dépendantes.

L'invention sera bien comprise à la lecture de la description ci-après faite à titre d'exemple non limitatif en regardant les dessins ci-annexés qui représentent schématiquement :
Figure 1 : un système de traitement de l'huile d'usinage dans une machine-outil connue de l'état de l'art.
Figure 2 : le système de traitement de l'huile d'usinage avec machine à filtrage extérieure connue de l'état de l'art.
Figures 3 et 4: un système de traitement de l'huile d'usinage selon une première variante de l'invention.
Figure 5 : un système de traitement de l'huile d'usinage selon une deuxième variante de l'invention.
Figure 6 : un système de traitement de l'huile d'usinage selon une troisième variante de l'invention.

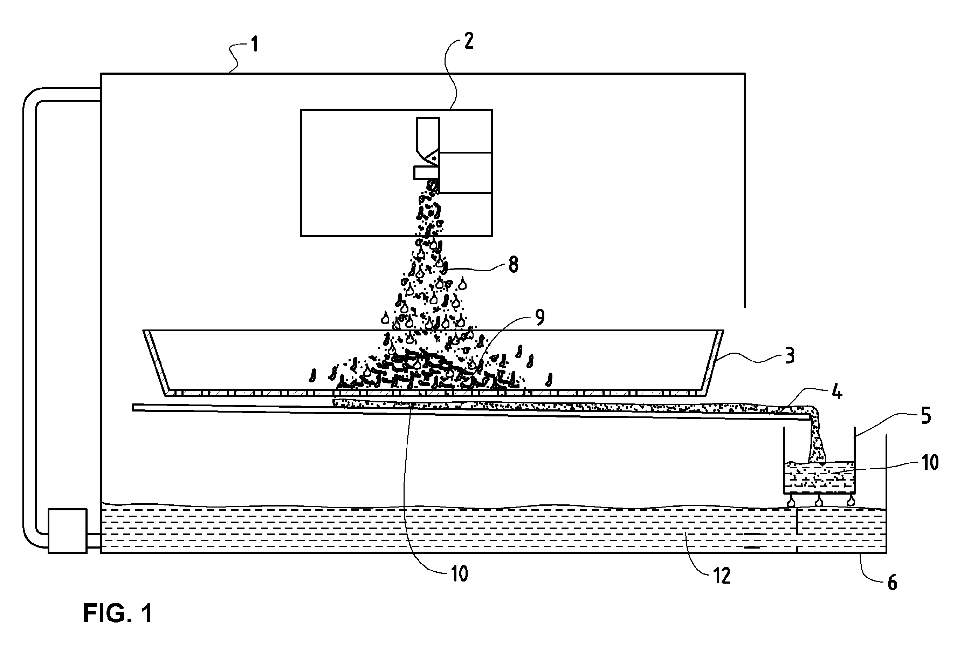

En se reportant au dessin de la Figure 1, on voit, schématiquement représentée, une machine-outil 1 ayant une zone d'usinage 2, ou sont générés les copeaux (9) et l'huile contaminée des résidus (8). L'huile sale et les copeaux (9) tombent sous force de pesanteur dans un bac perforé (3), qui fonctionne comme un tamis à grosses mailles, permettant à l'huile sale (10) de passer, mais récupérant les copeaux (9). Le bac à copeaux (3) est vidé régulièrement par l'opérateur de la machine-outil, car les copeaux ont généralement une valeur importante et sont destiné au recyclage. (Si l'operateur ne vide pas ce bac à copeaux à temps, les copeaux peuvent déborder du bac dans le bac à huile sale, même prenant la place de l'huile et ainsi générant un débordement de l'huile). L'huile sale (10) est attrapée sur une pente (4) qui la dirige vers un deuxième bac perforé (5) qui fonctionne comme un tamis à mailles fines, en enlevant les résidus importants. Ce bac (5) doit être aussi vidé regulièrement. L'huile (12) qui sort du deuxieme bac (5), quoique les copeaux et les résidus importants ont été enlevés, est toujours contaminée des particules très petites d'impuretés d'usinages. Cette huile partiellement nettoyée est circulée par une pompe (7), qui soulève l'huile vers la zone d'usinage (2) ou elle est réutilisée. Pour protéger la pompe (7) et pour éviter les blocage de tuyaux ou des crépines d'arrosage, on utilise souvent les filtres supplémentaires (pas réprésentés) entre le bac (6) et la pompe (7).

Il est aussi connu dans les systèmes de l'art antérieur de remplacer le bac à copeaux (3) et/ou le deuxième bac perforé (5) par un convoyeur comprenant un tapis en maille qui fonctionne comme un tamis, et qui permet à l'huile de passer par le tapis, en transportant les déchets vers l'extérieur de la machine-outil où ils sont récupérés dans un bac. Tels tapis roulants ne sont pas capables d'enlever les fins résidus de l'huile, c'est-à-dire les particules de quelques microns jusqu'à un ou deux millimètres, qui ne peuvent être enlevées que par filtrage.

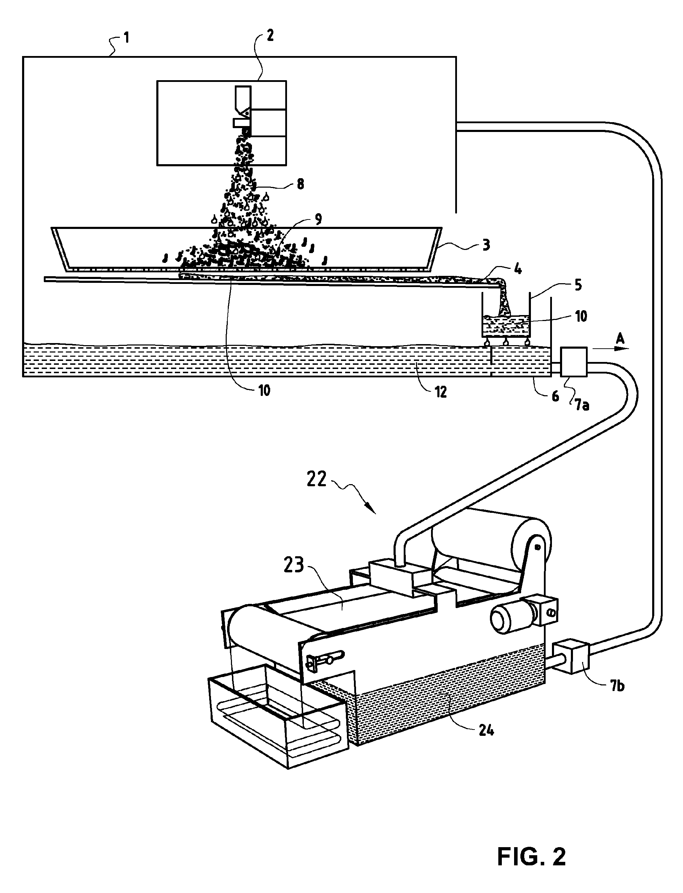

Un système de filtrage connu dans les systèmes de l'art antérieur est réprésenté dans la figure 2. Ce système comprend une machine à filtrage (22) extérieur à la machine-outil, comme celui décrit dans la demande de brevet japonaise JP2003210914 mentionnée ci-dessus. Un tel système de filtrage comprend un convoyeur avec nappe à matière de filtrage jetable (23) et un bac (24) pour récupérer l'huile filtrée. L'huile sale, qui se trouve dans le bac (24) en bas de la machine-outil, est soulevée par une pompe (7a) et des tuyaux à une hauteur au dessus de la surface supèrieure du convoyeur. L'huile qui tombe sur la nappe, passe par la nappe (23) et le convoyeur, étant récupérée dans le bac (24) à huile filtrée dans la machine à filtrage, d'où elle est soulevée de nouveau par la pompe (7b) et des tuyaux vers la zone d'usinage (2) de la machine-outil (1).

Un tel système de filtrage présente quelques inconvients : il faut deux bacs (un pour l'huile sale et un pour l'huile propre), ce qui représentent des coûts et des besoins de place importants. Le stockage de l'huile sale dans le bac (6) de la machine-outil (1) peut aussi contribuer à une dégradation de l'efficacité de l'huile pour l'usinage. Le pompage d'huile sale depuis le bac (6) la machine-outil (1) vers la machine à filtrage (22) aboutit aussi à une augmentation de mouvement, de turbulence et d'aération de l'huile sale, ce qui peut également dégrader l'efficacité de l'huile.

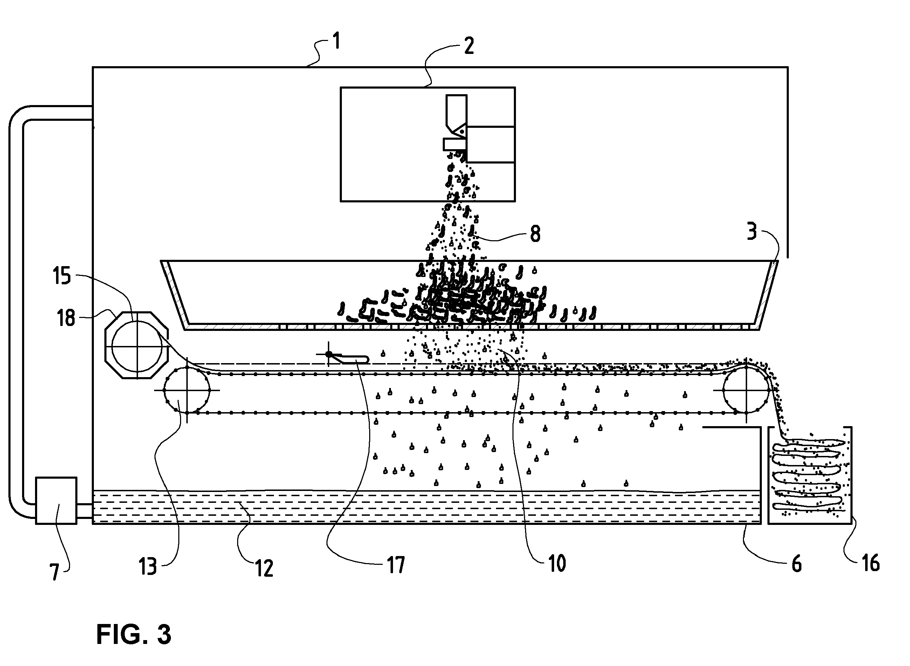

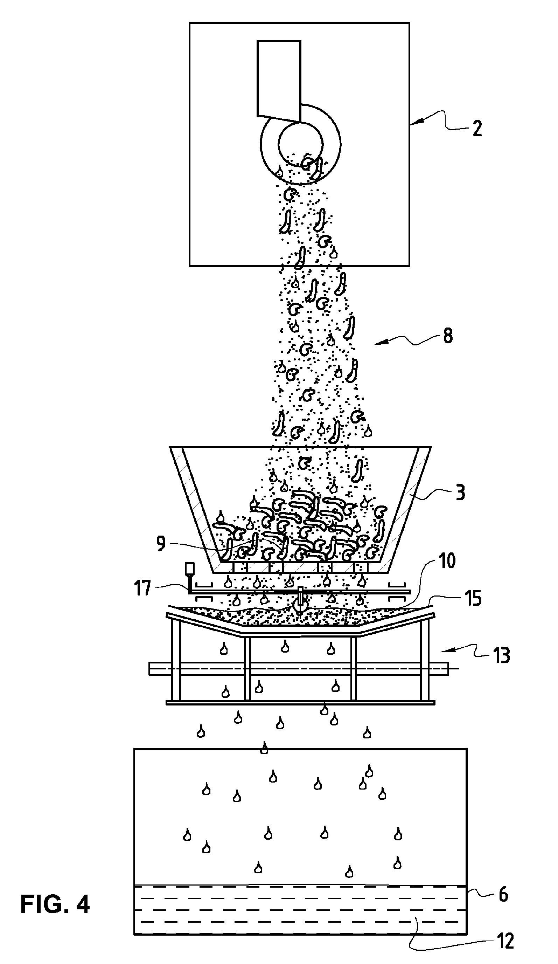

Les figures 3 et 4 présentent en vue latérale et frontale une première réalisation de la présente invention. Dans cette variante, un bac perforé (3) est disposé en-dessous de la zone d'usinage. Ce bac perforé (3) sert à récupéerer les copeaux (9), c'est-à-dire les déchets d'usinage à taille supérieure, qui sont destiné au recyclage. Le bac à copeaux (3) peut être muni de roulettes ou autres moyens de déplacement, tel que l'opérateur puisse le glisser hors de la machine-outil (1) pour vider les copeaux.

En-dessous du bac à copeaux (3) est un filtre à convoyeur (13), qui comprend un convoyeur à tapis roulant. Cette nappe sert à supporter la matière de filtrage (15), en laissant passer le fluide filtré par la matière de filtrage (15). La forme du convoyeur est telle que la surface supérieure est concave, pour que l'huile sale soit retenue sur la matière de filtrage pendant le filtrage. Le convoyeur est aussi muni d'un détecteur de niveau (17) pour communiquer le niveau du liquide et/ou des résidus sur le convoyeur. Ce détecteur de niveau (17) peut communiquer une information qui réprésente une mesure du niveau de la liquide et/ou des résidus sur le convoyeur, ou il peut communiquer une signale binaire qui indique si le niveau est plus haut ou plus bas d'un niveau prédéterminé, d'une façon connue de l'art. Un flotteur peut être utilisé, par exemple, tournant autour d'un axe latéral relatif à la surface du convoyeur. Un tel détecteur à flotteur (17) est réprésenté dans la figures 3 à 6. Dans un mode de réalisation préféré, le détécteur est adapté a signaler deux niveaux prédéterminés du fluide sur le convoyeur : par exemple un premier niveau (« niveau haut », qui indique la nécéssité d'avancer le convoyeur), et un second niveau (« niveau de débordement », qui signale un cas d'urgence). Le second niveau peut être prédétérminé tel que l'état est signallé bien avant qu'un débordement du fluide sale du convoyeur peut arriver. Un débordement du fluide sale dans le bac à huile propre nécéssiterait un arrêt de la machine-outil.

Dans un mode de réalisation de l'invention, cette détéction d'un second niveau haut est utilisée pour signaler la fin de la bobine de matière de filtrage. La matière de filtrage (papier, par exemple), est généralement collée au centre de la bobine, ce qui empêche l'avancement de la nappe à filtrage quand le papier est complètement usé. Dans ce cas, le niveau du fluide sur le convoyeur monte jusqu'au premier niveau, ou le convoyeur essaye d'avancer le papier, et puis, comme le papier n'avance pas, jusqu'au second niveau. De cette manière, la détéction du second niveau peut être utilisée comme indication de (entre autres) un état de « hors papier ». Par ce mode de réalisation, on évite le besoin d'un détécteur spécial « hors papier ».

Le tamis roulant du convoyeur peut être construit en maille de fil en acier inoxidable, par example, ou en grillage, ou en quelconque structure qui supporte la matière de filtrage pendant qu'elle avance, mais qui laisser passe de l'huile filtrée simultanément.

La matière de filtrage planaire est choisie selon les caractéristiques désirées du filtrage. Tels choix peuvent comprendre, par exemple, du papier, du tissu, de la cellulose, ou quelconques matières convenables au filtrage du fluide de coupe. Cette matière filtrante est stockée dans la machine-outil, sur une bobine, et avantageusement dans un boîtier (15) qui protège la matière de filtrage (par exemple, le papier filtrant, qui est très absorptif) contre l'huile et l'humidité dans la machine-outil. Le boîter (15) est contruit et disposé telle que la matière de filtrage puisse sortir dans la direction d'avancement du convoyeur.

En-dessous de l'ensemble du bac à copeaux (3) et du convoyeur filtrant (13) se trouve le bac (6) à récupération de l'huile propre (12), ce bac (6) étant disposé telle que l'huile qui passe par le bac à copeaux (3) et le convoyeur filtrant (13) tombe sous force de pesanteur dans le bac à huile propre (6).

Dans le contexte de cette demande, les termes au-dessus et en-dessous comprennent toutes constructions et toutes dispositions relatives des éléments qui permettent au fluide de coupe à couler, sous force de pesanteur seulement, d'un premier endroit à un deuxième. Les termes au-dessus et en-dessous ont le sense de « plus haut » et « plus bas », et ils ne sont pas limités à quelconque définition stricte d'une disposition relative verticale.

Puisque le filtrage fin de l'huile se déroule en-dessous de la zone d'usinage, et puisque l'huile ainsi filtrée est récupérée en-dessous de l'ensemble de filtrage, il n'y a pas d'accumulation d'huile sale. Le bac dans la base de la machine-outil constitue un réservoir que d'huile propre.

De la même manière que le bac à copeaux (3), mentionnée ci-dessus, le convoyeur peut être muni des moyens (des roulettes roulant sur des rails solidaires au cadre de la machine-outil, par exemple) qui permettent à l'opérateur de glisser le convoyeur (13), avec le réservoir de papier (15,18) vers l'extérieure de la machine-outil pour l'entretien. Ce déplacement du convoyeur peut s'effectuer de la manière d'un tiroir, par example, soit dans la direction de la longeur du convoyeur, soit latéralement. La machine-outil est aussi munie des ouvertures d'accès et/ou des fenêtres de surveillance, qui permettent à l'opérateur de détecter une quantité basse de la matière filtrante sur la bobine, par exemple, ou un blocage du convoyeur. Autrement, le convoyeur et la machine-outil sont munis d'une ouverture ou d'autres moyens qui permettent à l'opérateur de remplacer la bobine du filtre sans sortir le convoyeur de la machine-outil.

La matière filtrante usée est récupérée, avec les fins résidus, dans un bac (16) à déchets.

Pendant l'opération de la machine-outil, le convoyeur avance d'une manière qui convient à l'usinage. La façon d'avancement peut être contrôlée mécaniquement ou par logiciel - par exemple par le système de commande numérique (CN) de la machine-outil. Dans le cas le plus simple, le convoyeur peut avancer à une vitesse constante prédeterminée, main d'une façon intermittente, à des intervalles soit contrôlés directement par le détécteur de niveau, soit déterminés par le système de commande numérique de la machine-outil. Dans une variante, le CN de la machine-outil peut aussi contrôler la vitesse du convoyeur.

Pendant un usinage qui produit beacoup de copeaux mais peu de fins résidus, par exemple, le convoyeur peut avancer lentement. Pour un usinage qui produit moins de copeaux mais beaucoup de fins résidus, par contre, le convoyeur peut avancer plus rapidement. Le convoyeur peut également être avancé d'une façon variable ou discontinue, dépendant de l'information communiquée par le détecteur de niveau. Le réglage de la vitesse de cette façon, lié au niveau du liquide et/ou des résidus sur la matière de filtrage, apporte un filtrage à éfficacité optimale.

Dans une autre variante, le moyens sont disposés pour la capture des données concernant l'état des moyens de filtrage et/ou des moyens d'enlevement de copeaux utilisés par la machine-outil, tel que les niveaux de fluide et/out de papier, la vitesse du convoyeur, et d'afficher ces données sur l'affichage de la machine-outil. De cette manière, l'opérateur peut surveiller l'état du filtrage et/ou l'enlèvement des copeaux sur l'écran de la machine-outil.

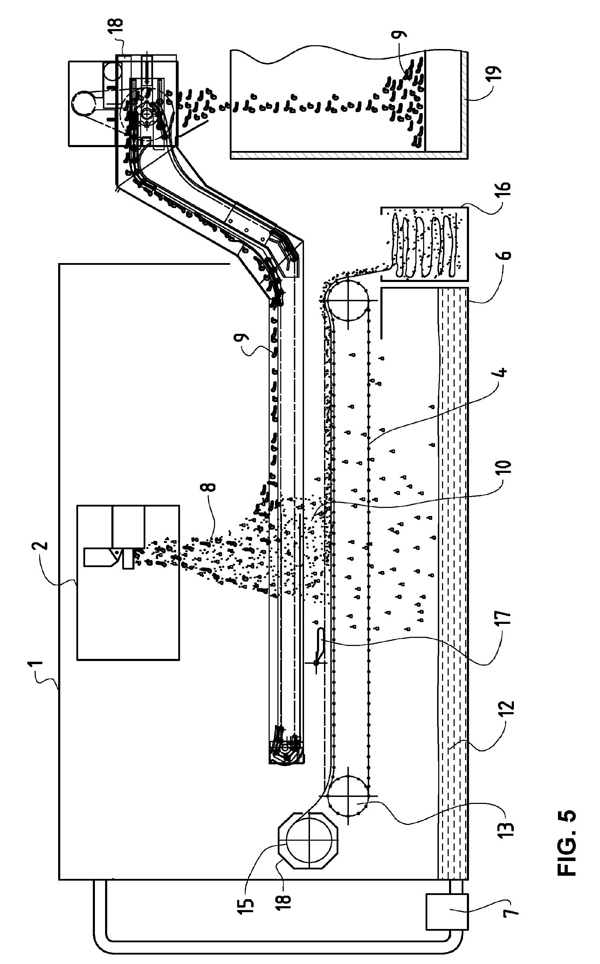

La figures 5 présente en vue latérale une deuxième réalisation de la présente invention. Les références de la figures 5 correspondent numériquement aux références des figures 3 et 4. Dans cette variante, le bac perforé (3) des figure 3 et 4 est remplacé d'un convoyeur à copeaux (18). Les autres éléments du système reste les mêmes que dans la première variante décrit ci'dessus. L'utilisation d'un convoyeur au lieu du bac à copeaux permet de vider les copeaux sans arrêter la machine-outil.

De la même manière du bac à copeaux, le convoyeur à copeaux (18) peut être muni de roulettes ou autres moyens de déplacement, tel que l'opérateur puisse le glisser hors de la machine-outil (1) pour l'entretien.

Dans une autre variante de cette réalisation, le convoyeur à copeaux (18) et le convoyeur à filtrage (13, 15) peuvent être tous les deux montés sur ou dans un chassis commun, et ce chassis commun peut être munis de roulettes ou d'autres moyens de déplacement, tel que l'opérateur puisse glisser les deux convoyeurs ensemble hors de la machine-outil (1) pour l'entretien.

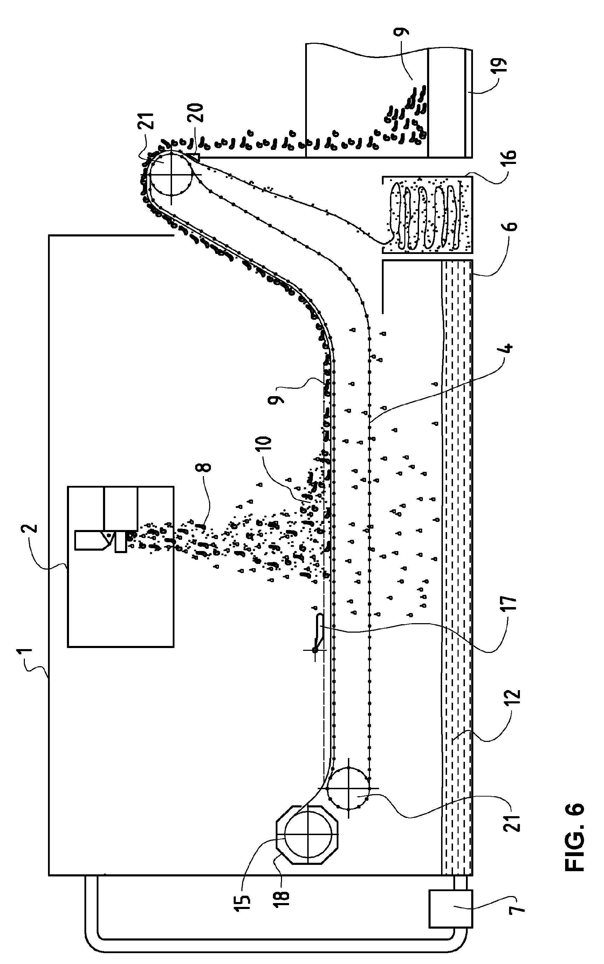

La figure 6 présente en vue latérale une troisième réalisation de la présente invention. Dans cette variante, les deux fonctions de l'enlèvement des copeaux et du filtrage de l'huile sont effectuées par le même convoyeur (21). Les références de figure 6 correspondent numériquement aux références des figure 3 à 5. Le convoyeur (21) de cette variante est adapté pour les deux fonctions : il a une surface supérieure concave pour supporter et retenir le fluide de coupe et tous les copeaux et résidus d'usinage, en avancant la matière de filtrage vers l'extérieur de la machine-outil et, ultérieurement, dans le bac de dechets (16), d'une façon similaire au convoyeur à filtrage (13) des figures 3 à 5. Par contre, le convoyeur (21) est aussi adapté à récupérer les copeaux et les transporter vers l'extérieur de la machine-outil et dans un bac extérieur de copeaux (19).

Un moyen de séparation (20), tel qu'une lamelle ou un racleur, assure que la matière de filtrage et les fins résidus arrivent dans un bac à déchets (16), et que les copeaux arrivent dans le bac à copeaux (19).

De la même manière du bac à copeaux des figures 3 et 4, et du convoyeur à copeaux (3) des figures 3 à 5, le convoyeur (21) de cette variante peut être muni de roulettes ou autres moyens de déplacement, tel que l'opérateur puisse le glisser hors de la machine-outil (1) pour le nettoyage ou l'entretien.

La présente invention n'est pas limitée aux modes de réalisation qui ont été explicitement décrits, mais elle en inclut les diverses variantes et généralisations contenues dans le domaine des revendications ci-après.

## Revendications

1. Système de traitement de fluide de coupe, adaptable à une machine-outil (1), dont le fluide de coupe, contaminé par les déchets d'usinage, sort d'une zone d'usinage (2),
le système de traitement comprenant :
des moyens de séparation (3, 18, 13, 15) pour séparer les déchets d'usinage du fluide de coupe, les moyens de séparation (3, 18, 13, 15) comprenant un convoyeur à filtrage (13,15),
le convoyeur à filtrage (13,15) étant disposés au moins partiellement à l'intérieur de la machine-outil (1),
le système de traitement comprenant en outre des moyens de récupération du fluide de coupe (6),
le système de traitement étant **caractérisé en ce que** :
ledit convoyeur à filtrage (13,15) est disposé en-dessous de ladite zone d'usinage (2),
ledit convoyeur à filtrage (13,15) comprend une nappe à matière de filtrage jetable disposée sur une surface supérieure du convoyeur (13,15),
ledit convoyeur à filtrage (13,15) est disposé au-dessus des moyens de récupération du fluide de coupe (6),
tel que le fluide de coupe puisse passer, sous force de pesanteur, de la zone d'usinage (2), par ladite nappe à matière de filtrage jetable, aux moyens de récupération du fluide de coupe (6).

2. Système de traitement de fluide de coupe selon la revendication 1, dans lequel lesdit moyens de séparation (3, 18, 13, 15) comprennent des moyens de récupération de copeaux (3, 18), disposés au-dessus dudit convoyeur à filtrage (13,15), tel que le fluide de coupe puisse passer, sous force de pesanteur, de la zone d'usinage (2), par lesdits moyens de récupération de copeaux (3, 18), et par ladite nappe à matière de filtrage jetable, aux moyens de récupération du fluide de coupe (6).

3. Système de traitement de fluide de coupe selon la revendication 2, dans lequel ledit convoyeur à filtrage (13, 15) est adapté pour supporter lesdits moyens de récupération de copeaux (3, 18).

4. Système de traitement de fluide de coupe selon la revendication 2, comprenant les moyens d'insertion pour permettre un déplacement dudit convoyeur à filtrage (13,15) et/ou desdits moyens de récupération de copeaux (3, 18) vers l'extérieur et/ou vers l'intérieur de la machine-outil (1).

5. Système de traitement de fluide de coupe selon l'une quelconques des revendications précédentes, dans lequel ledit convoyeur à filtrage (13,15) est muni d'un détécteur de niveau (17) pour signaler une information représentant le niveau du fluide de coupe sur le convoyeur à filtrage (13, 15).

6. Système de traitement de fluide de coupe selon la revendication 5, dans lequel l'information signalée par ledit détecteur comprend soit au moins un signal binaire, indiquant quand ledit niveau du fluide dépasse un niveau de référence prédéterminé, soit un jeu de données indiquant une mesure dudit niveau du fluide.

7. Système de traitement de fluide de coupe selon la revendication 5 ou 6, comprenant un moyen de contrôle, pour diriger la façon d'avancement dudit convoyeur à filtrage (13,15) selon l'information signalée dudit détecteur de niveau (17).

8. Système de traitement de fluide de coupe selon la revendication 7, dans lequel ledit convoyeur à filtrage (13,15) est adapté à avancer la nappe à matière de filtrage à une vitesse variable déterminée par ledit moyen de contrôle, et/ou d'une façon intermittente dirigée par ledit moyen de contrôle.

9. Système de traitement de fluide de coupe selon l'une quelconques des revendications précédentes, dans lequel ledit convoyeur à filtrage (13,15) comprend un moyen de distribution (18) de la matière de filtrage (15) ainsi que des moyens de surveillance de la quantité de matière de filtrage (15) restante dans le distributeur (18) et d'indiquer quand la quantité baisse en-dessous d'une quantité prédéterminée.

10. Système de traitement de fluide de coupe selon la revendication 9, dans lequel ledit moyen de distribution comprend des moyens de protection disposé pour protéger des réserves de matière de filtrage (15) contre l'humectage par le fluide de coupe quand le dispositif se trouve à l'intérieur de ladite machine-outil (1).

11. Système de traitement de fluide de coupe selon la revendication 10, dans lequel les moyens de surveillance comprennent des moyens de mesurer la quantité de la matière de filtrage (15) dépensée par le distributeur (18), et/ou des moyens de calculer, selon la façon d'avancement dudit convoyeur à filtrage déterminée par ledit moyen de contrôle, la quantité de la matière de filtrage (15) dépensée par le distributeur (18).

12. Système de traitement de fluide de coupe selon l'une quelconque des revendications 7 à 8, dans lequel le moyen de contrôle est l'unité de commande numérique de la machine-outil.

13. Système de traitement de fluide de coupe selon la revendication 12, dans lequel l'unité de commande numérique de la machine-outil est adapté à afficher au moins une information concernant l'état dudit convoyeur à filtrage (13,15).

14. Dispositif de traitement de fluide d'usinage pour filtrer le fluide de coupe d'une machine-outil (1) dans laquelle le fluide de coupe sortant d'une zone d'usinage (2) tombe vers un moyen de récupération (6) du fluide de coupe,
ledit dispositif (13,15) comprenant un convoyeur à filtrage (13) à tamis continue et perméable, adapté à porter une nappe à matière de filtrage jetable (15) disposée sur une surface supérieure du convoyeur à filtrage (13),
le dispositif étant **caractérisé en ce qu'**il est d'une construction qui lui permet d'être inséré au moins partiellement à l'intérieur d'une machine-outil (1), en-dessous de la zone d'usinage (2) de la machine-outil (1) et au-dessus du moyen de récupération (6) du fluide de coupe, tel que le fluide de coupe sortant de la zone d'usinage (2) puisse passer, sous force de pesanteur, de la zone d'usinage (2), par ladite nappe à matière de filtrage (15), au moyen de récupération (6) du fluide de coupe de la machine-outil (1).

15. Dispositif de filtrage selon la revendication 14, comprenant en outre un convoyeur à copeaux (18), étant adapté pour transporter les copeaux vers l'éxtèrieure de la machine-outil (1), et étant disposé au-dessus dudit convoyeur à filtrage (13, 15) et solidaire audit convoyeur de filtrage (13, 15),
ledit dispositif étant d'une construction qui permet au convoyeur à copeaux (18) et au convoyeur à filtrage (13, 15) d'être inséré, à la fois, au moins partiellement à l'intérieur d'une machine-outil (1), en-dessous de la zone d'usinage (2) de la machine-outil (1) et au-dessus du moyen de récupération (6) du fluide de coupe, tel que le fluide de coupe sortant de la zone d'usinage (2) puisse passer, sous force de pesanteur, de la zone d'usinage (2), par ledit convoyeur à copeaux (18) et par ladite nappe à matière de filtrage (15), au moyen de récupération (6) du fluide de coupe de la machine-outil (1).
